# NEUE EUROPÄISCHE PATENTSCHRIFT

(11) **EP 2 475 498 B2**
(45) Veröffentlichungstag und Bekanntmachung des Hinweises auf die Entscheidung über den Einspruch: **08.04.2020**
(45) Hinweis auf die Patenterteilung: 03.07.2013
(21) Anmeldenummer: 10774132.4
(22) Anmeldetag: 15.10.2010
(51) Int. Cl.: B23Q 1/52, B23Q 16/02

(54) **RUNDSCHALTTISCH MIT DIREKTEM ANTRIEB DER TRANSPORTKURVE**
ROTARY INDEXING TABLE HAVING A DIRECT DRIVE OF THE TRANSPORT CAM
TABLE DE TRANSFERT CIRCULAIRE COMPRENANT UN ENTRAÎNEMENT DIRECT DE LA CAME DE TRANSPORT

(30) Priorität: 16.10.2009 DE 202009014041 U; 16.10.2009 DE 102009049618
(43) Veröffentlichungstag der Anmeldung: 18.07.2012
(73) Patentinhaber: Weiss GmbH, 74722 Buchen (DE)
(72) Erfinder: WEISS, Uwe, 74722 Buchen-Bödigheim (DE)
(74) Vertreter: Manitz Finsterwald Patent- und Rechtsanwaltspartnerschaft mbB
(86) Internationale Anmeldenummer: PCT/EP2010/006320
(87) Internationale Veröffentlichungsnummer: WO 2011/045077

(56) Entgegenhaltungen:
- EP-A1- 1 754 566
- DE-A1-102006 061 310
- DE-B3-102007 021 681
- DE-B3-102007 021 681
- US-A- 3 533 309
- Zimmer, D.: "Direktantriebe passend ausgewählt", Fachbericht Antriebstechnik, no. 2, 2005,

## Beschreibung

Die vorliegende Erfindung betrifft einen Rundschalttisch mit einem Teller, der in eine Antriebsnut einer Kurventrommel eingreifende Mitnehmer aufweist. Der Teller ist über die Kurventrommel zu einer Drehbewegung um eine Drehachse antreibbar, die ihrerseits von einem Motor zu einer Drehbewegung um ihre Längsachse antreibbar ist.

Einen Rundschalttisch der eingangs beschriebenen ist offenbart beispielsweise die DE 10 2007 021 681 B3.

Derartige Rundschalttische finden eine breite Anwendung unter anderem in der Montage- und Automatisierungstechnik. Auf dem Teller werden beispielsweise Werkstücke angeordnet, die zu ihrer Bearbeitung und/oder Montage in kontinuierliche oder getaktete Drehbewegungen versetzt werden. Dabei ist die Präzision des Rundschalttischs von besonderer Bedeutung, damit das Werkstück stets wohl definierte Positionen/Orientierungen relativ zu den Montage-/Bearbeitungswerkzeugen aufweist. Die Präzision der Vorrichtung ergibt sich aus der Genauigkeit, mit der der Teller die einzelnen Bearbeitungspositionen einnehmen kann, sowie der Präzision der Drehbewegung des Tellers zwischen den Bearbeitungspositionen.

Es ist daher eine Aufgabe der vorliegenden Erfindung, einen Rundschalttisch zu schaffen, der eine zuverlässige und präzise Drehbewegung des Tellers ermöglicht.

Diese Aufgabe wird durch einen Rundschalttisch mit den Merkmalen des Anspruchs 1 gelöst

Der erfindungsgemäße Rundschalttisch der eingangs genannten Art zeichnet sich dadurch aus, dass der Motor die Kurventrommel direkt antreibt. Unter einem direkten Antrieb ist zu verstehen, dass zwischen dem Motor und der Kurventrommel kein Getriebe angeordnet ist. Dadurch werden die stets im Inneren eines Getriebes auftretenden Reibungsverluste vermieden. Außerdem wirkt sich ein Spiel in dem Getriebe nachteilig auf die Präzision des Rundschalttischs aus. Daher muss ein derartiges Getriebe spielarm konstruiert sein, was nur unter großem Aufwand möglich und daher teuer ist. Mit anderen Worten wird durch den Direktantrieb, d.h. durch den Verzicht auf ein Getriebe und eine Antriebsmomentübertragung von dem Motor auf die Kurventrommel ohne "Umwege", die Ansteuerung der Kurventrommel vereinfacht und präziser gestaltet.

Weitere Ausführungsformen der vorliegenden Erfindung sind in der Beschreibung, den Zeichnungen und den Unteransprüchen angegeben.

Eine konstruktiv einfache und kompakte Bauform sieht eine koaxiale Anordnung der Kurventrommel und des Motors vor.

Gemäß einer weiteren Ausführungsform der vorliegenden Erfindung ist der Motor ein Asynchronmotor. Diese Ausführungsform bietet sich insbesondere für Rundschalttische an, bei denen Kostenfaktoren eine Rolle spielen und Abstriche bei der Präzision der Drehbewegung des Tellers gemacht werden können. Diese Abstriche lassen sich durch eine geeignete Regelung des Asynchronmotors minimieren.

Der Motor ist ein Torque-Motor, der die Kurventrommel direkt antreibt. Torque-Motoren sind - vereinfacht gesagt - auf hohe Drehmomente optimierte, große (hochpolige) Motoren mit Hohlwelle. Sie liefern in der Regel vergleichsweise niedrige Antriebsdrehzahlen. Diese Eigenschaften sind für einen Rundschalttisch besonders geeignet, da zumeist keine hohen Drehzahlen des Drehtellers erforderlich sind, dieser aber üblicherweise mit einem hohen Antriebsmoment angetrieben werden soll. Zwar sind Direktantriebe eines Drehtellers mittels eines Torque-Motors bekannt, allerdings sind derartige Rundschalttische spezielle Konstruktionen, die lediglich in bestimmten Anwendungsbereichen zum Einsatz gelangen. Bei der vorliegenden Ausführungsform erfolgt der Antrieb des Drehtellers über die Kurventrommel, die wiederum von einem Torque-Motor angetrieben wird. Bei einem Antrieb der Kurventrommel durch einen Torque-Motor kann weitgehend auf bestehende Konstruktionsprinzipien zurückgegriffen werden. Lediglich der Antrieb der Kurventrommel wird verändert/ausgetauscht.

Die Kurventrommel weist einen Fortsatz auf, der im Wesentlichen den Durchmesser der Kurventrommel besitzt und der Funktionsbestandteile des Torque-Motors aufweist. Die Kurventrommel selbst umfasst somit einen Abschnitt, der im Vergleich zu dem die Antriebsnut aufweisenden Abschnitt nicht querschnittreduziert ist. Mit anderen Worten bildet der Fortsatz einen Verlängerungsabschnitt der Kurventrommel ohne Antriebsnut. Der Fortsatz ist gleichzeitig der Rotor des Torque-Motors, d.h. der Fortsatz der Kurventrommel weist die für den Betrieb des Torque-Motors notwendigen Bestandteile auf. Diese Bestandteile können beispielsweise Magnete oder Spulen sein.

Die beschriebene Bauform stellt die "direkteste" Bauform eines Direktantriebs der Kurventrommel dar, da auch auf eine Antriebswelle zur Obertragung des Antriebsmoments von dem Motor auf die Kurventrommel verzichtet werden kann.

Nachfolgend wird die Erfindung rein beispielhaft anhand vorteilhafter Ausführungsformen unter Bezugnahme auf die Zeichnungen beschrieben. Es zeigen:
- Fig. 1: eine schematische Ansicht eines beispielhaften Rundschalttischs von oben,
- Fig.2: einen Querschnitt durch eine Ausführungsform eines erfindungsgemäßen Rundschalttischs.

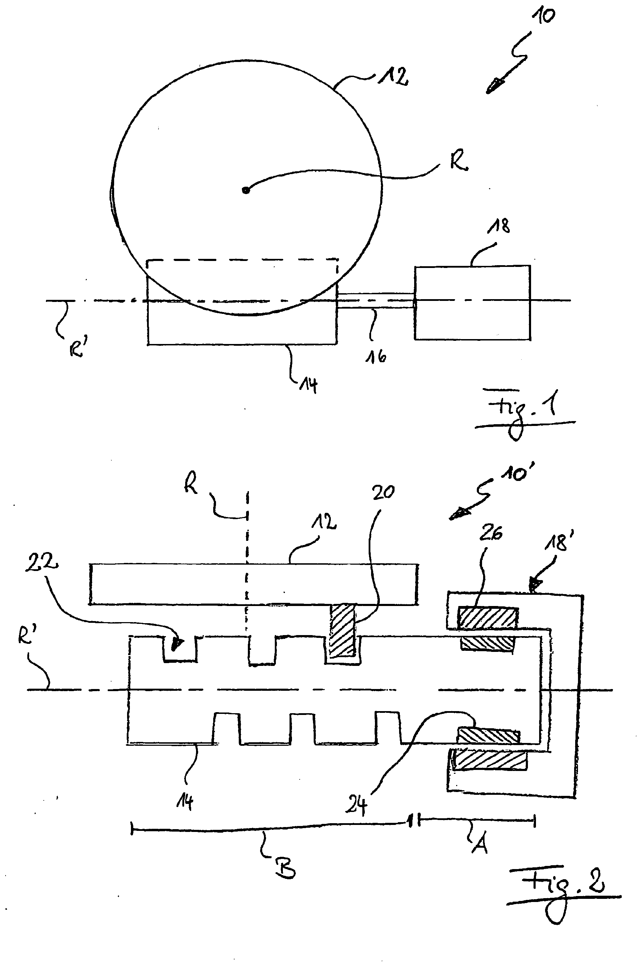

Fig. 1 zeigt in schematischer Weise einen Rundschalttisch 10, der einen Drehteller 12 aufweist, auf dem Werkstücke zur Bearbeitung und/oder Montage aufgespannt werden können. Der Drehteller 12 wird von einer Kurventrommel 14 zu einer Drehbewegung um eine Rotationsachse R angetrieben, die senkrecht zur Bildebene verläuft. Um eine Antriebsbewegung der Kurventrommel 14, die eine Rotation der Kurventrommel 14 um eine Rotationsachse R' senkrecht zu der Rotationsachse R ist, auf den Drehteller 12 zu übertragen, weist letzterer Mitnehmer (in Fig. 1 nicht gezeigt) auf, die in an sich bekannter Form in eine die Kurventrommel 14 spiralförmig umlaufende Antriebsnut (in Fig. 1 nicht gezeigt) mit konstanter oder variierender Steigung eingreifen.

Die Kurventrommel 14 steht mit einer Antriebswelle 16 drehfest in Verbindung. Die Antriebswelle 16 ist gleichzeitig die Ausgangswelle eines Motors 18, der beispielsweise elektrisch angetrieben wird.

Bei dem Rundschalttisch 10 sind die Kurventrommel 14 und der Motor 18 koaxial angeordnet, d.h. sowohl der Motor 18 als auch die Antriebswelle 16 und die Kurventrommel 14 rotieren bei Betrieb um die gemeinsame Rotationsachse R'.

Fig. 1 ist zu entnehmen, dass der Antrieb der Kurventrommel 14 auf direkte Weise erfolgt, d.h. ohne ein zwischen den Motor 18 und die Kurventrommel 14 geschaltetes Getriebe. Lediglich die Antriebswelle 16 ist vorgesehen, um ein Antriebsmoment zwischen den beiden genannten Komponenten zu übertragen.

Als Motor 18 kann grundsätzlich jeder Motor - auch nichtelektrischer Bauart - zum Einsatz gelangen, wie beispielsweise Asynchron- oder Synchronmotoren.

Fig. 2 zeigt einen Querschnitt durch eine erfindungsgemäße Ausführungsform 10' des Rundschalttischs. Im linken Teil der Zeichnung ist zu erkennen, wie ein Mitnehmer 20 des Drehtellers 12 in eine Antriebsnut 22 der Kurventrommel 14 eingreift. Die Darstellung dieses bekannten Antriebskonzept ist lediglich stark vereinfacht dargestellt.

Der rechte Teil der Fig. 2 umfasst die Antriebskomponenten der Kurventrommel 14. Im Gegensatz zu der in Fig. 1 gezeigten Ausführungsform weist der Antrieb des Rundschalttischs 10' keine Antriebswelle 16 auf. Vielmehr bildet die Kurventrommel 14 selbst ein Teil des Motors 18', der als Torque-Motor ausgebildet ist. Die Kurventrommel 14 weist an einem Verlängerungsabschnitt A (Elektro-)Magnete 24 auf, die mit Spulen 26 des Torque-Motors 18' zusammenwirken. Mit anderen Worten ist der Verlängerungsabschnitt A der Rotor des Torque-Motors 18', der mit einem die Antriebsnut 22 aufweisenden Abschnitt B der Kurventrommel 14 in direkter Verbindung steht. Die Abschnitte A, B sind folglich integrale Bestandteile der Kurventrommel 14. Der Abschnitt B der Kurventrommel 14 kann - bezogen auf den Verlängerungsabschnitt A - auch als Verlängerung des Rotors des Torque-Motors 18' bezeichnet werden. Der Verlängerungsabschnitt A weist im Wesentlichen den gleichen Durchmesser auf, wie der mit der Antriebsnut 22 versehene Abschnitt B der Kurventrommel 14.

Die in Fig. 2 skizzenhaft dargestellte Ausführungsform des Antriebs des Rundschalttischs 10' zeichnet sich durch eine kompakte Bauform und einem präzisen Antrieb der Kurventrommel 14 aus. Teure und reibungs-/ spielbehaftete Getriebeelemente gelangen nicht zum Einsatz.

**Bezugszeichenliste**

| | |
|---|---|
| 10, 10' | Rundschalttisch |
| 12 | Drehteller |
| 14 | Kurventrommel |
| 16 | Antriebswelle |
| 18 | Motor |
| 18' | Torque-Motor |
| 20 | Mitnehmer |
| 22 | Antriebsnut |
| 24 | Magnet |
| 26 | Spule |
| R, R' | Rotationsachse |
| A | Verlängerungsabschnitt |
| B | Nutabschnitt |

## Patentansprüche

1. Rundschalttisch mit einem Teller (12), der in eine Antriebsnut einer Kurventrommel (14) eingreifende Mitnehmer (20) aufweist, wobei der Teller (12) über die Kurventrommel (14) zu einer Drehbewegung um eine Drehachse (R) antreibbar ist, die ihrerseits von einem Motor (18, 18') zu einer Drehbewegung um ihre Längsachse (R') antreibbar ist,
**dadurch gekennzeichnet, dass**
der Motor (18, 18') ein Torque-Motor (18') ist, der die Kurventrommel (14) direkt antreibt, so dass zwischen dem Motor (18, 18') und der Kurventrommel (14) kein Getriebe angeordnet ist,
wobei die Kurventrommel (14) einen Fortsatz (A) aufweist, der im Wesentlichen den Durchmesser der Kurventrommel (14) aufweist und der Funktionsbestandteile (24) des Torque-Motors aufweist.

2. Rundschalttisch nach Anspruch 1,
**dadurch gekennzeichnet, dass**
die Kurventrommel (14) und der Motor (18, 18') koaxial angeordnet sind.

3. Rundschalttisch nach Anspruch 1 oder 2,
**dadurch gekennzeichnet, dass**
der Motor (18, 18') ein Asynchronmotor ist.

## Claims

1. A rotary indexing table having a plate (12) which has drivers (20) engaging into a driving groove of a barrel cam (14), wherein the plate (12) can be driven via the barrel cam (14) to make a rotational movement about an axis of rotation (R), which barrel cam (14) is in turn drivable by a motor (18, 18') to make a rotational movement about its longitudinal axis (R'),
**characterized in that**
the motor (18, 18') is a torque motor (18') which directly drives the barrel cam (14) such that no gear is arranged between the motor (18, 18') and the barrel cam (14),
with the barrel cam (14) having a prolongation (A) which has substantially the diameter of the barrel cam (14) and which has functional components (24) of the torque motor.

2. A rotary indexing table in accordance with claim 1,
**characterized in that**
the barrel cam (14) and the motor (18, 18') are coaxially arranged.

3. A rotary indexing table in accordance with claim 1 or claim 2,
**characterized in that**
the motor (18, 18') is an asynchronous motor.

## Revendications

1. Table de transfert circulaire comprenant un plateau (12), qui comprend un doigt d'entraînement (20) engagé dans une rainure d'entraînement d'un tambour à cames (14), dans laquelle le plateau (12) est susceptible d'être entraîné via le tambour à cames (14) en un mouvement rotatif autour d'un axe de rotation (R), le tambour étant de son côté susceptible d'être entraîné par un moteur (18, 18') en un mouvement rotatif autour de son axe longitudinal (R'),
**caractérisée en ce que** le moteur est un moteur-couple (18'), qui entraîne directement le tambour à cames (14), de sorte qu'aucun mécanisme n'est agencé entre le moteur (18, 18') et le tambour à cames (14),
dans laquelle le tambour à cames (14) comprend un prolongement (A), qui présente sensiblement le diamètre du tambour à cames (14), et qui comporte des éléments constitutifs fonctionnels (24) du moteur-couple.

2. Table de transfert circulaire selon la revendication 1,
**caractérisée en ce que** le tambour à cames (14) et le moteur (18, 18') sont agencés coaxialement.

3. Table de transfert circulaire selon la revendication 1 ou 2,
**caractérisée en ce que** le moteur (18, 18') est un moteur asynchrone.
